# EUROPEAN PATENT APPLICATION

(11) **EP 2 562 982 A1**
(43) Date of publication of application: **27.02.2013**
(21) Application number: 11771502.9
(22) Date of filing: 12.02.2011
(51) Int. Cl.: H04L 29/06

(54) **METHOD AND SYSTEM FOR RADIO LINK FAILURE INFORMATION PROCESSING**

(30) Priority: 19.04.2010 CN 201010151815
(71) Applicant: ZTE Corporation, Shenzhen, Guangdong 518057 (CN)
(72) Inventor: GAO, Yin, Guangdong 518057 (CN); HE, Feng, Guangdong 518057 (CN)
(74) Representative: Carpintero Lopez, Francisco
(86) International application number: PCT/CN2011/070964
(87) International publication number: WO 2011/131049

(57) **Abstract**

Disclosed in the present invention are a method and system for processing radio link failure information. In the above method, a network device managing a cell notifies the peer of the RLF information processing ability of the network device for the peer to carry out RLF information processing according to the RLF information processing ability, wherein the RLF information processing ability comprises: whether or not each cell managed by the network device supports RLF reporting information processing. By way of the technical solution provided by the present invention, not only meaningless waste of resources of the terminal is avoided, but also the network side is avoided to carry out meaningless processing and forwarding after receiving the RLF information, thus reducing the overhead of air interface signaling resources, and reducing the memory and power consumption waste for the terminal and network element to carry out RLF information processing.

## Description

### FIELD OF THE INVENTION

The present invention relates to the communication field, and in particular to a method and system for processing radio link failure information.

### BACKGROUND OF THE INVENTION

In the long term evolution network (abbreviated as LTE), due to the effect of factors such as radio transmission environment or the movement of the user equipment (abbreviated as UE) in the network coverage area, the connection of the UE may be abnormal, for example, the UE may have radio link failure (abbreviated as RLF), thus affecting the normal service of the UE. In order to avoid such situation, the reason leading to RLF has to be detected as soon as possible, and the main reason for RLF is that there is coverage leak in the coverage area and there is improper handover in the LTE network.

In order to timely discover the coverage problem or improper handover parameter problem, in the related art, the UE records the measurement result before the RLF occurs and the measurement result when initiating reestablishment subsequently, and when the UE initiates RRC connection reestablishment or RRC connection establishment toward the network side, the measurement results are reported to the network side as RLF information, and this measurement result may include the reference signal power and reference signal reception quality of the measured cell and the location information corresponding to the measurement result when RLF occurs and so on. The evolved NodeB or other devices at the network side can judge the RLF of the local UE is caused by coverage leak or improper handover parameter according to the report information of the UE, and the devices at the network side can also exchange RLF information via the X2 interface or S1 interface.

However, during practical application, the device at the network side may not possess the ability to process the RLF information, or for a certain cell managed by this network device (such as evolved NodeB), this network device may not support the processing of the RLF information by this cell, and in such case, if the terminal or another device reports the RLF information to a network device which does not possess the ability to process RLF information, then such RLF information is useless, resulting in resource waste of the network device and the terminal.

### SUMMARY OF THE INVENTION

The main object of the present invention is to provide a method and system for processing radio link failure information, so as to solve the above problems.

A method for processing radio link failure information is provided according to one aspect of the present invention, comprising: a network device managing a cell notifying a peer of RLF information processing ability of the network device for the peer to carry out its RLF information processing according to the RLF information processing ability, wherein the RLF information processing ability comprises: whether or not each cell managed by the network device supports the processing of RLF reporting information.

In this case, the peer is a terminal accessing a network via the network device; and the network device notifying the terminal of the RLF information processing ability comprises: the network device broadcasting the RLF information processing ability to the terminal.

In this case, the peer is a terminal accessing a network via the network device; and the network device notifying the terminal of the RLF information processing ability comprises: the network device sending a message carrying the RLF information processing ability to the terminal.

In this case, the message is an RRC connection establishment message, an RRC connection reject message or an RRC reconfiguration message.

In this case, the peer is a peer device communicating with the network device via X2; and the network device notifying the peer device of the RLF information processing ability comprises: the network device sending an X2 interface message carrying the RLF information processing ability to the peer device.

In this case, the X2 interface message is at least one of the following: X2 setup request message, X2 setup response message or eNodeB configuration update message.

In this case, the peer is a peer device communicating with the network device via S 1 interface; and the network device notifying the peer device of the RLF information processing ability comprises: the network device sending an S1 interface message carrying the RLF information processing ability to the peer device.

In this case, the network device is an evolved NodeB.

A system for processing radio link failure information is provided according to another aspect of the present invention, comprising: a network device managing a cell being configured to notify a peer of the RLF information processing ability of the network device for the peer to carry out RLF information processing according to the RLF information processing ability, wherein the RLF information processing ability comprises: whether or not each cell managed by the network device supports the processing of RLF reporting information; and the peer, configured to receive the RLF information processing ability and carry out RLF information processing according to the RLF information processing ability.

In this case, the peer is a terminal accessing a network via the network device; and the network device notifies the terminal of the RLF information processing ability by way of one of the following manners: the network device broadcasting the RLF information processing ability to the terminal; and the network device sending a message carrying the RLF information processing ability to the terminal.

In this case, the peer is a peer device communicating with the network device via X2 interface or S1 interface; the network device notifies the peer device of the RLF information processing ability by way of one of the following manners: the network device sending an X2 interface message carrying the RLF information processing ability to the other device; and the network device sending an S 1 interface message carrying the RLF information processing ability to the other device.

In this case, the network device is an evolved NodeB.

By way of the present invention, by using the technical solution that the network device notifies the peer of the RLF information processing ability, the terminal can lean whether the network side possesses RLF information processing ability, not only meaningless waste of resources of the terminal is avoided, but also the network side avoids carrying out meaningless processing and forwarding after receiving the RLF information, thus reducing the overhead of air interface signaling resources, and reducing the memory and power consumption waste for the terminal and network element to carry out RLF information processing.

### BRIEF DESCRIPTION OF THE DRAWINGS

The drawings illustrated here provide a further understanding of the present invention and form a part of the present application. The exemplary embodiments and the description thereof are used to explain the present invention without unduly limiting the scope of the present invention. In the drawings:
FIG. 1 is a structural block diagram of a system for processing RLF information according to the embodiments of the present invention;
Fig. 2 is a flowchart of a method for processing RLF information according to the embodiments;
Fig. 3 is a flowchart of an evolved NodeB sending the RLF processing ability via broadcast according to the embodiments of the present invention;
Fig. 4 is a flowchart of an evolved NodeB notifying the terminal of the RLF processing ability via a signaling message according to the embodiments of the present invention;
Fig. 5 is a flowchart of an evolved NodeB 1 notifying an evolved NodeB 2 of the RLF processing ability via an X2 interface message according to the embodiments of the present invention; and
Fig. 6 is a flowchart of an evolved NodeB 1 notifying an evolved NodeB 2 of the RLF processing ability via an S1 interface message according to the embodiments of the present invention.

### DETAILED DESCRIPTION OF EMBODIMENTS

The present invention will be described hereinafter in detail with reference to the accompanying drawings and in conjunction with embodiments. It needs to note that the embodiments of the present application and the features in the embodiments can be combined with each other if there is no conflict.

### Embodiment I

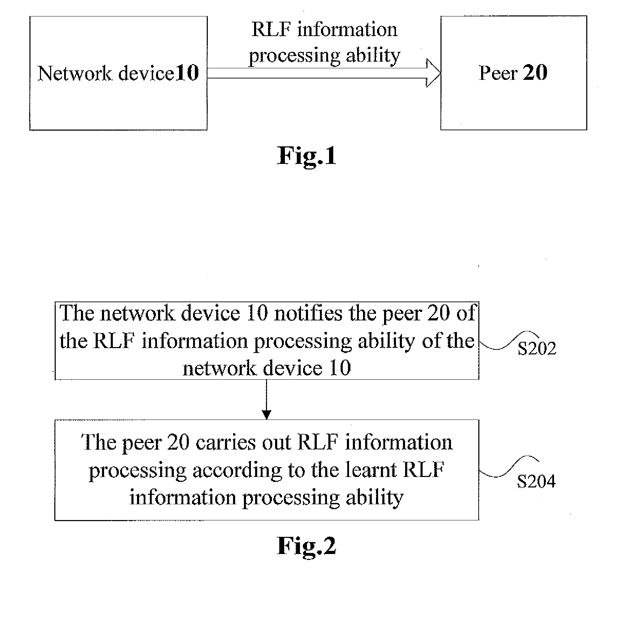

In this embodiment, a system for processing radio link failure information is provided, and FIG. 1 is a structural block diagram of a system for processing RLF information according to the embodiments of the present invention, which system comprises: a network device 10 managing a cell, and a peer 20. In this case, the network device 10 managing a cell is configured to notify the peer 20 of the RLF information processing ability of the network device 10, wherein the RLF information processing ability includes whether or not whether or not each cell managed by the network device 10 supports the processing of RLF reporting information; and the peer 20 is configured to receive the above RLF information processing ability and carry out RLF information processing according to the above RLF information processing ability.

In this embodiment, a method for processing radio link failure information is further provided, and Fig. 2 is a flowchart of a method for processing RLF information according to the embodiments, and as shown in Figs. 1 and 2, the method comprises:
in step S202, a network device 10 notifies a peer 20 of the RLF information processing ability of the network device 10, wherein the RLF information processing ability comprises: whether or not each cell managed by the network device supports the processing of RLF reporting information; and
in step S204, the peer 20 carries out RLF information processing according to the learnt RLF information processing ability.

During practical application, the network device 10 may not possess the ability of processing the RLF information, or for a certain cell managed by the network device 10, the network device 10 may not support the processing of the RLF information of this cell; the existing technical solution of processing radio link failure (RLF) information fails to take into account the ability of the network device 10 to process the RLF information, i.e. whether or not the network device 10 can process RLF information, the peer 20 records the RLF information when there is radio link failure and sends the RLF information to the network device 10, if the peer 20 reports RLF information to a network device 10 which does not possess the ability of processing RLF information, then this RLF information is useless, and the possible result is that the peer 20 always waits for the response of the network device 10, affecting the normal work of the peer 20, and the recording and sending operations of the peer 20 and the receiving operation of the peer 20 cause resource waste at the network device 10 and the peer 20.

In the above system and method provided by this embodiment, before the peer 20 sends RLF information to the network device 10, the network device notifies the peer 20 of its own RLF information processing ability, and after the peer 20 learns the RLF information processing ability of the network device 10, it determines whether or not to record the RLF information and whether or not to send RLF information to the network device when RLF occurs, so that in the situation where the network device 10 does not possess RLF information processing ability, the processing flow of the peer 20 and the network device 10 is simplified and system resources are saved.

It needs to be noted that the RLF information processing ability of the network device 10 can include a plurality of pieces of information, for example, a piece of information is configured for each cell managed by the network device 10, which information can include cell identifier and identifies whether or not the network device can support the RLF information processing of this cell.

During implementation, the above network device 10 can be but not limited to an evolved NodeB (abbreviated as eNB) in the LTE network. The above peer 20 can be but not limited to a terminal accessing the network via the network device, or a peer device communicating with the network device 10 via the X2 interface or S1 interface, such as eNB.

It needs to be noted that the above system and method are not limited to be applied in the LTE network but can also be applied in other mobile communication networks, and in a specific network, the processing of the RLF information can be done by the eNB or the radio network controller (abbreviated as RNC), if in the specific network the processing of the RLF information is done by the RNC, then the network device 10 mentioned in the above system and method can be RNC.

During implementation, the network device 10 can notify the peer 20 of the RLF information processing ability of the network device 10 in a variety of ways, and it is in particular as follows:
I. The peer 20 is a terminal, then the following method can be employed but not limited thereto:
   (1) the network device 10 broadcasts its own RLF information processing ability toward the terminal in idle state or connected state, and the broadcast period can be set by the administrator according to the application scenarios or random broadcast, and the broadcast range is not limited to a certain cell managed by the network device 10, the broadcast can be in a plurality of cells or in cells managed by adjacent network devices, so that terminals in the cell and neighbor of the network device 10 which may switch to the cell of the network device can learn the information processing ability of the network device 10; and
   (2) the network device 10 sends a message carrying its own RLF information processing ability to the terminal, for example, when the terminal requests for RRC connection establishment, requests for RRC reestablishment or selects to reside in this cell in a certain cell managed by the network device 10, the network device 10 notifies the terminal of its own RLF information processing ability via an existing signaling message or a dedicated signaling message.
      During implementation, the process of the peer 20 carrying out RLF information processing according to the RLF information processing ability can include but not limited to: the peer 20 determining whether or not to record the RLF information and whether or not to send the RLF information to the network device 10 when RLF occurs in a certain cell managed by the network device 10.
      By way of notifying the terminal of the RLF information processing ability of the network device 10 in the above manner, the terminal can learn the RLF information processing ability of the network device 10, and if RLF occurs subsequently, the terminal determines whether or not to record the RLF measurement report and send the same to the network device 10 according to the RLF information processing ability of the network device 10, and the terminal need not record or send the RLF information each time RLF occurs, thus avoiding meaningless resource waster of the terminal.
II. The peer 20 is a peer device of the network device 10, for example, when the peer is also an eNB, then the following method can be employed but not limited thereto:
   (1) when an X2 interface is being established among eNBs, their own RLF information processing ability is exchanged by way of an establishment request/response message of the X2 interface;
   (2) the eNBs can exchange their own RLF information processing ability by way of other messages (such as eNB configuration update message) of the X2 interface; and
   (3) the eNBs can implement the same by way of an S1 interface message, for example, it can be a newly defined S1 interface message or extending the existing S1 interface message, such as MME configuration transmission message or eNB configuration transmission message.

By way of notifying the RLF information processing ability of the network device 10 toward the peer eNB in the above manner, the peer eNB can learn the RLF information processing ability of the network device 10, and if RLF occurs subsequently, the peer eNB determines whether or not to forward the received RLF measurement report related to the network device 10 to the network device 10 according to the RLF information processing ability of the network device 10, and the peer eNB need not forward the RLF information every time, thus avoiding redundant information load over the interface and also avoiding meaningless resource waste of the network device.

### Embodiment II

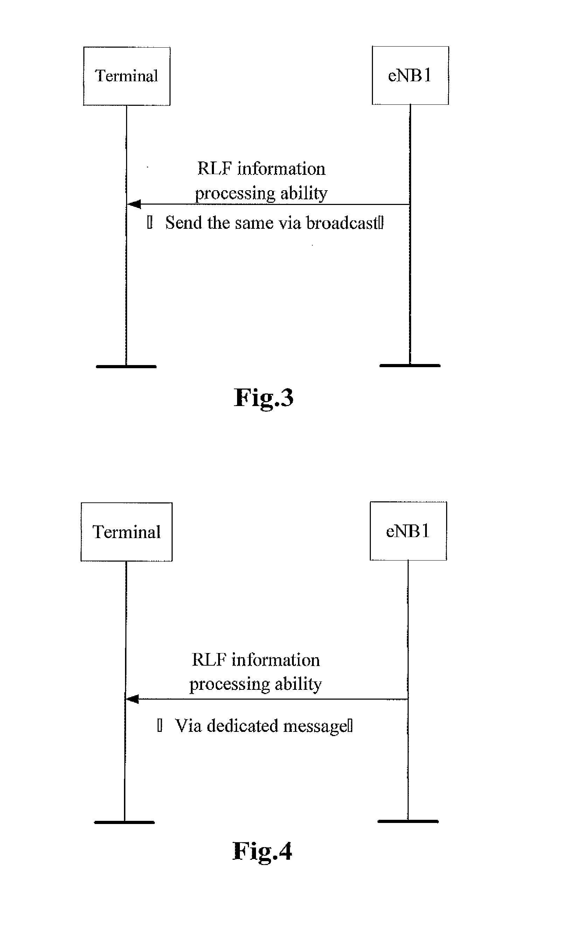

In this embodiment, the method and system provided in embodiment I will be described in detail by way of a particular embodiment, wherein the network device 10 is an eNB 1 and the peer 20 is a terminal; Fig. 3 is a flowchart of an evolved NodeB sending the RLF processing ability via broadcast according to the embodiments of the present invention, and as shown in Fig. 3, the terminal learns whether or not the eNB supports processing of the RLF information from each cell by receiving the broadcast message carrying the RLF information processing ability in idle state or connected state, and the particular flow is as follows:
in step 1, the RLF information processing ability of the eNB 1 is broadcasted in the cell managed by the eNB 1, for example, it can be broadcasted in a system message block (abbreviated as SIB);
in step 2, after having learnt the RLF information processing ability, the terminal determines that the eNB 1 has the RLF measurement result processing ability for the cell, and if so, then terminal needs to measure and record the same when RLF occurs in this cell, and perform step 3, otherwise, perform step 4;
in step 3, the terminal has RLF in the cell, the terminal is in the RRC reestablishment or establishment flow, the terminal sends the RLF information to the eNB 1 by way of a dedicated signaling, it can include but not limited to the measurement result before RLF and/or measurement result after RLF; and
in step 4, the terminal has RLF in the cell, does not record the measurement result, and does not report the RLF information during the RRC reestablishment or establishment flow.

### Embodiment III

In this embodiment, the method and system provided in embodiment I will be described in detail by way of a particular embodiment, wherein the network device 10 is an eNB 1 and the peer 20 is a terminal; Fig. 4 is a flowchart of an evolved NodeB notifying the terminal of the RLF processing ability via a signaling message according to the embodiments of the present invention, and the signaling message in this embodiment is a relevant signaling of RRC establishment connection, and the particular flow is as follows:
in step 1, the terminal enters the connected state in the cell managed by the eNB 1, and the terminal initiates an RCC connection establishment request (Radio Resource Control Connection Request);
in step 2, after receiving the RCC establishment request message, the eNB 1 can carry the RLF information processing ability in an RRC connection establishment message or an RRC connection reject message;
in step 3, after having learnt the RLF information processing ability, the terminal determines that the eNB 1 has the RLF measurement result processing ability for the cell, and if so, then terminal needs to measure and record the same when RLF occurs in this cell, and perform step 4, and otherwise, then perform step 5;
in step 4, the terminal has RLF in the cell, the terminal is during the RRC reestablishment or establishment flow, and the terminal sends RLF information to the eNB 1 by way of a dedicated signaling; and
in step 5, the terminal has RLF in the cell, does not record the measurement result, and does not report the RLF information during the RRC reestablishment or establishment flow.

### Embodiment IV

In this embodiment, the method and system provided in embodiment I will be described in detail by way of a particular embodiment, wherein the network device 10 is an eNB 1 and the peer 20 is a terminal, and as shown in Fig. 4, the signaling message in this embodiment is an RRC reestablishment relevant signaling, and the particular flow is as follows:
in step 1, the terminal carries out RRC establishment in the cell managed by the eNB 1, and the eNB 1 can notify the terminal of the RLF information processing ability by way of an RRC reconfiguration message;
in step 2, after having learnt the RLF information processing ability, the terminal determines that the eNB 1 has the RLF measurement result processing ability for the cell, and if so, then terminal needs to measure and record the same when RLF occurs in this cell, and perform step 3, and otherwise, then perform step 4;
in step 3, the terminal has RLF in the cell, the terminal is during the RRC reestablishment or establishment flow, and the terminal sends RLF information to eNB 1 by way of a dedicated signaling; and
in step 4, the terminal has RLF in the cell, does not record the measurement result, and does not report the RLF information during the RRC reestablishment or establishment flow.

### Embodiment V

In this embodiment, the method and system provided in embodiment I will be described in detail by way of a particular embodiment, wherein the network device 10 is an eNB 1 and the peer 20 is a terminal, and as shown in Fig. 4, the signaling message in this embodiment is a newly extended dedicated signaling message, and the particular flow is as follows:
in step 1, the terminal selects to reside in cell 1, the eNB 1 can notify the terminal of the RLF information processing ability by way of a newly independent dedicated message;
in step 2, after having learnt the RLF information processing ability, the terminal determines that the eNB 1 has the RLF measurement result processing ability for the cell, and if so, then terminal needs to measure and record the same when RLF occurs in this cell, and perform step 3, and if not, then perform step 4;
in step 3, the terminal has RLF in the cell, the terminal is during the RRC reestablishment or establishment flow, and the terminal sends RLF information to the eNB 1 by way of a dedicated signaling; and
in step 4, the terminal has RLF in the cell, does not record the measurement result, and does not report the RLF information during the RRC reestablishment or establishment flow.

### Embodiment VI

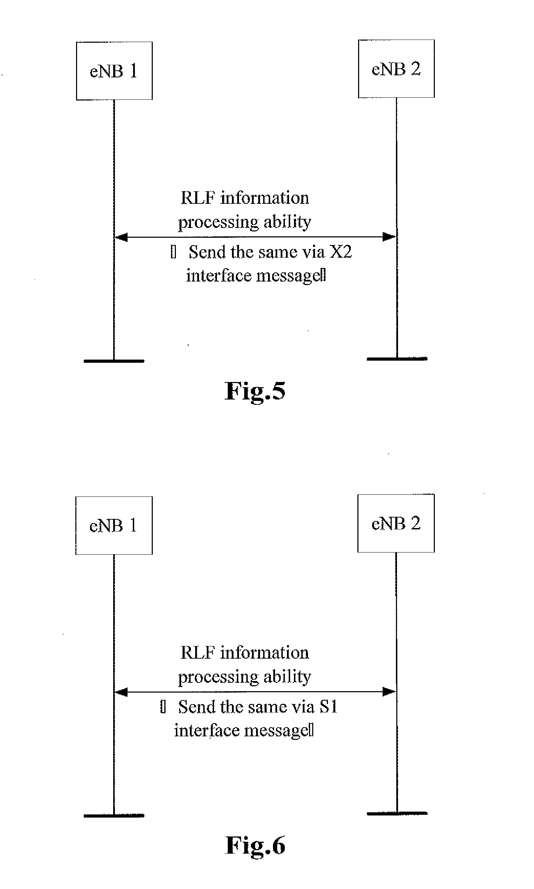

In this embodiment, the method and system provided in embodiment I will be described in detail by way of a particular embodiment, wherein the network device 10 is an eNB 1 and the peer 20 is a terminal; Fig. 5 is a flowchart of an evolved NodeB 1 notifying an evolved NodeB 2 of the RLF processing ability via an X2 interface message according to the embodiments of the present invention, and in this embodiment, the cell 1 belongs to the eNB 1 and cell 2 belongs to the eNB 2. The eNB 1 associated with cell 1 supports RLF information processing, and the eNB 2 associated with cell 2 does not support RLF information processing, and the particular flow is as follows:
in step 1, eNB 1 can notify eNB 2 of its RLF information processing ability for cell 1 by way of an X2 setup message;
in step 2, eNB 2 can notify eNB 1 of its RLF information processing ability of cell 1 by way of an X2 setup response message;
optionally, eNB 1 and the eNB can also notify each other of the RLF measurement result processing ability of the cell by way of other signaling messages over X2 interface, such as eNB configuration update message.
in step 3, since the terminal does not know whether the eNB 2 associated with cell 2 supports RLF measurement result processing, the terminal will record the occurring RLF measurement result in cell 2; and
in step 4, at this moment, the terminal has too late handover and but is successful to be reestablished to cell 1, since the eNB 1 associated with the cell 1 supports RLF measurement result processing ability, the cell 1 will acquire the measurement result of the terminal according to the RLF information reported by the terminal, and at the same time, the eNB 1 associated with the cell 1 can learn that the eNB 2 associated with cell 2 does not support the processing of the RLF information by way of an X2 interface flow message, then the eNB 1 will not send the RLF information to the eNB 2 after acquiring the RLF information reported by the terminal, thus avoiding redundant information load over the interface.

### Embodiment VII

In this embodiment, the method and system provided in embodiment I will be described in detail by way of a particular embodiment, wherein the network device 10 is an eNB 1 and the peer 20 is an eNB 2; Fig. 6 is a flowchart of an evolved NodeB 1 notifying an evolved NodeB 2 of the RLF processing ability via an X2 interface message according to the embodiments of the present invention, and in this embodiment, the cell 1 belongs to eNB 1 and cell 2 belongs to eNB 2. The eNB 1 associated with cell 1 supports RLF information processing, and the eNB 2 associated with cell 2 does not support RLF information processing, and the particular flow is as follows:
in step 1, eNB 1 can notify eNB 2 of its RLF information processing for cell 1 by way of an S 1 interface message;
in step 2, eNB 2 can notify eNB 1 of its RLF information processing for cell 1 by way of a response message of the above S1 interface;
optionally, eNB 1 and eNB 2 can also notify each other of the RLF measurement result processing ability of the cell by way of other signaling messages over S 1 interface, such as MME configuration transmission message, eNB configuration update message, or a newly defined S1 interface message.

In step 3, since the terminal does not know whether or not the eNB 2 associated with cell 2 supports RLF measurement result processing, the terminal will record the occurring RLF measurement result in cell 2; and
in step 4, at this moment, the terminal has too late handover and but is successful to be reestablished to cell 1, since eNB 1 associated with the cell 1 supports RLF measurement result processing ability, the cell 1 will acquire the measurement result of the terminal according to the RLF information reported by the terminal, and at the same time, the eNB 1 associated with the cell 1 can learn that the eNB 2 associated with the cell 2 does not support the processing of the RLF information by way of an S1 interface flow message, then the eNB 1 will not send the RLF information to the eNB 2 after acquiring the RLF information reported by the terminal, thus avoiding redundant information load over the interface.

It can be seen from the above description that the present invention realized the following technical effects: the terminal learns whether or not the network side possess the RLF information processing ability, not only meaningless waste of resources of the terminal is avoided, but also the network side avoids carrying out meaningless processing and forwarding after receiving the RLF information, thus reducing the overhead of air interface signaling resources, and reducing the memory and power consumption waste for the terminal and network element to carry out RLF information processing.

### Industrial applicability

The technical solution provided by the embodiments of the present invention can process the RLF information by way of software without changing the hardware structure of the network device, which is easy to implement and has industrial applicability.

Above description is only to illustrate the preferred embodiments but not to limit the present invention. Various alternations and changes to the present invention are apparent to those skilled in the art. The scope defined in claims shall comprise any medication, equivalent substitution and improvement within the spirit and principle of the present invention.

## Claims

1. A method for processing radio link failure (RLF) information, comprising:
a network device managing a cell notifying a peer of RLF information processing ability of the network device for the peer to carry out its RLF information processing according to the RLF information processing ability, wherein the RLF information processing ability comprises: whether or not each cell managed by the network device supports the processing of RLF reporting information.

2. The method according to Claim 1, wherein
the peer is a terminal accessing a network via the network device; and
the network device notifying the terminal of the RLF information processing ability comprises: the network device broadcasting the RLF information processing ability to the terminal.

3. The method according to Claim 1, wherein
the peer is a terminal accessing a network via the network device; and
the network device notifying the terminal of the RLF information processing ability comprises: the network device sending a message carrying the RLF information processing ability to the terminal.

4. The method according to Claim 3, wherein the message is an RRC connection establishment message, an RRC connection reject message or an RRC reconfiguration message.

5. The method according to Claim 1, wherein
the peer is a peer device communicating with the network device via X2; and
the network device notifying the peer device of the RLF information processing ability comprises: the network device sending an X2 interface message carrying the RLF information processing ability to the peer device.

6. The method according to Claim 5, wherein the X2 interface message is at least one of the following: X2 setup request message, X2 setup response message or eNodeB configuration update message.

7. The method according to Claim 1, wherein
the peer is a peer device communicating with the network device via S1 interface; and
the network device notifying the peer device of the RLF information processing ability comprises: the network device sending an S1 interface message carrying the RLF information processing ability to the peer device.

8. The method according to any one of Claims 1 to 7, wherein the network device is an evolved NodeB.

9. A system for processing radio link failure (RLF) information, comprising:
a network device managing a cell being configured to notify a peer of RLF information processing ability of the network device, wherein the RLF information processing ability comprises: whether or not each cell managed by the network device supports the processing of RLF reporting information; and
the peer being configured to receive the RLF information processing ability and carry out RLF information processing according to the RLF information processing ability.

10. The system according to Claim 9, wherein
the peer is a terminal accessing a network via the network device; and
the network device notifies the terminal of the RLF information processing ability by way of one of the following manners:
the network device broadcasting the RLF information processing ability to the terminal; and
the network device sending a message carrying the RLF information processing ability to the terminal.

11. The system according to Claim 9, wherein
the peer is a peer device communicating with the network device via an X2 interface or an S1 interface;
the network device notifies the peer device of the RLF information processing ability by way of one of the following manners:
the network device sends an X2 interface message carrying the RLF information processing ability to the other device; and
the network device sends an S1 interface message carrying the RLF information processing ability to the other device.

12. The system according to any one of Claims 9 to 11, wherein the network device is an evolved NodeB.
